# EUROPÄISCHE PATENTSCHRIFT

(11) **EP 3 289 299 B1**
(45) Veröffentlichungstag und Bekanntmachung des Hinweises auf die Patenterteilung: **27.02.2019**
(21) Anmeldenummer: 16721220.8
(22) Anmeldetag: 08.04.2016
(51) Int. Cl.: F26B 3/06, B09B 3/00, C05F 17/02, E04D 12/00, F26B 9/02, F26B 25/10

(54) **VERFAHREN UND VORRICHTUNG ZUR BEHANDLUNG VON MÜLL**
METHOD AND APPARATUS FOR TREATMENT OF WASTE
MÉTHODE ET DISPOSITIF POUR LE TRAITEMENT DE DÉCHETS

(30) Priorität: 30.04.2015 AT 2642015
(43) Veröffentlichungstag der Anmeldung: 07.03.2018
(73) Patentinhaber: Holcim Technology Ltd, 8645 Rapperswil-Jona (CH)
(72) Erfinder: MAIER, Beat René, CH-5024 Küttigen (CH)
(74) Vertreter: Keschmann, Marc
(86) Internationale Anmeldenummer: PCT/IB2016/000450
(87) Internationale Veröffentlichungsnummer: WO 2016/174513

(56) Entgegenhaltungen:
- US-A1- 2002 019 045
- US-A1- 2008 032 393
- US-A1- 2008 051 620

## Beschreibung

Die Erfindung betrifft ein Verfahren zur Behandlung von Müll, insbesondere Hausmüll, gemäß Anspruch 1 und eine Vorrichtung gemäß Anspruch 8. Das Verfahren umfasst unter anderem das Bereitstellen eines geschlossenen Gebäudes zur Aufnahme des Mülls, wobei das Dach des Gebäudes als semipermeable Membran ausgebildet ist, das Befüllen des Gebäudes mit dem Müll, wobei der Müll zu einer Miete aufgeschüttet wird, das Durchführen einer biologischen Trocknung des Mülls unter Luftzufuhr, wobei der Luftabzug durch die semipermeable Membran hindurch erfolgt, und das Austragen des getrockneten Mülls aus dem Gebäude, sowie eine Vorrichtung zur Durchführung eines solchen Verfahrens.
Es besteht das Bestreben alternative Brennstoffe, d.h. Brennstoffe mit einem im Vergleich zu hochwertigem Erdgas, Kohle oder Erdöl verringerten Brennwert beispielsweise für den Zementklinkerherstellungsprozess nutzbar zu machen, wobei solche alternativen Brennstoffe häufig in Form von Müll zur Verfügung stehen. Müll steht in besonders großen Mengen als Hausmüll zur Verfügung. Unter Hausmüll wird ein Abfallgemisch verstanden, das aus privaten Haushalten und vergleichbaren Einrichtungen stammt. Mit Rücksicht auf die einschlägigen Mülltrennungsvorschriften wird Hausmüll oft auch als Haushalts-Restmüll bezeichnet. Die stoffliche Zusammensetzung von Hausmüll ist regional und saisonbedingt verschieden. Hausmüll enthält meist variierende Anteile Kunststoff, Feinmüll, Papier/Pappe, Windeln, Textilien, Glas, Metall, Verbundmaterial und Vegetabilien. Aus brennstofftechnischer Sicht kann Hausmüll in die Komponenten Wasser, Inertstoff, fossile Brennstoffsubstanz und organische Brennstoffsubstanz unterteilt werden, wobei weiters anzumerken ist, dass Hausmüll einen hohen Anteil an organischen Substanzen, d.i. ca. 30-60% (organische Fraktion inkl. Wasser), aufweist.

Bisher war das Verwertungspotential für derartige Abfallstoffe in der Zementindustrie aufgrund des erheblichen Feuchtigkeitsgehalts limitiert, wenn die Abfallstoffe direkt in die Brenneranlagen eingebracht werden, was aufgrund des Wassergehaltes zu einem erhöhten Wärmebedarf im Klinkerherstellungsverfahren zur Verdampfung des Wassers geführt hat. Darüber hinaus resultiert aus den erheblichen eingebrachten Wassermengen nach der Verdampfung des Wassers ein ungünstig hohes Volumen von Gesamtprozessabgasen, was wiederum zu einem erhöhten Aufwand beim Abgasmanagement führt.

Um Hausmüll in der Zementindustrie als alternativen Brennstoff nutzen zu können, ist demgemäß eine Vorbehandlung einschließlich einer Trocknung erforderlich. Typischerweise erfolgt die Trocknung unter Einsatz von hochwertigen teuren Brennstoffen, wie Erdgas oder Diesel, was jedoch in wirtschaftlicher Hinsicht nachteilig ist. Alternativ hierzu kann der Müll einer biologischen Trocknung unterworfen werden.

Unter biologischer Trocknung wird im Allgemeinen ein Prozess verstanden, in welchem Hausmüll belüftet und somit von Luft durchströmt wird und dabei aerob verrottet. Der Hausmüll wird hierbei in einen Reaktor eingebracht und unter Zuführung von Sauerstoff werden die biologisch leichter zersetzbaren organischen Anteile des Hausmülls mikrobiell abgebaut. Die Zersetzung der organischen Bestandteile durch Mikroorganismen ist eine exotherme Reaktion, die innerhalb des Mülls eine Temperatursteigerung bedingt. Hierbei wird jedoch lediglich ein geringer Teil der organischen Anteile des Mülls zersetzt, wodurch dessen Energie weitestgehend erhalten bleibt und der Hausmüll als hochenergetischer Ersatzbrennstoff nutzbar bleibt. Die bei der aeroben Verrottung entstehende biologische Wärme bedingt eine Trocknung des Hausmülls. Mittels der bei diesem Prozess frei werdenden Energie nimmt die den Hausmüll durchströmende Luft Wärme und Feuchtigkeit auf und dadurch wird eine Absenkung des Feuchtigkeitsgehalts innerhalb des Hausmülls bewirkt. Nach der biologischen Trocknung kann der Hausmüll als verbrennungstechnisch hochwertiger und CO₂-neutraler Ersatzbrennstoff im Zementherstellungsprozess genutzt werden.

Die biologische Trocknung benötigt als externe Energiequelle lediglich Strom für das Antreiben des Belüftungssystems und ist somit weitaus energiesparender und billiger als die eingangs genannten, fossile Energieträger erfordernden Trocknungsmethoden.

Die biologische Trocknung zielt im Unterschied zu anderen Kompostierungsverfahren darauf ab, den Hausmüll bei möglichst kurzer Verweilzeit im Reaktor als qualitativ hochwertigen Ersatzbrennstoff nutzbar zu machen. Hierbei wird erstens der Energieinhalt im Hausmüll durch eine größtmögliche Entfernung des Wassers erhöht und zweitens ein Großteil des Heizwertes der organischen Stoffe innerhalb des Mülls erhalten, da lediglich ein minimaler, organischer Abbau stattfindet.

Zur biologischen Trocknung kommt oftmals eine semipermeable Membran zum Einsatz, mittels welcher der zu einer Miete aufgeschüttete Müll abgedeckt wird, wobei unter semipermeabler Membran eine Membran verstanden wird, die gas- und dampfdurchlässig, aber wasserdicht ist. Die Verwendung einer semipermeablen Membrane, beispielsweise GoreTex®-Membran, führt dazu, dass die aus der Miete austretende feuchte Luft durch die Membran nach außen entweichen kann, die Miete vor Regen und anderen Umwelteinflüssen jedoch geschützt bleibt, sodass eine effiziente Trocknung gewährleistet ist. Weiters hat die Membran die Wirkung, dass die für die biologische Trocknung erforderlichen Bakterien in der Miete verbleiben und dass die Umgebung vor Geruchsbelästigung geschützt wird.

Es ist eine Vielzahl von Verfahren und Vorrichtungen zur biologischen Trocknung von Müll bekannt.

Die EP 1146027 A1 beschreibt eine Vorrichtung zur Kompostierung von organischen Abfällen, in welcher die Abfälle als trapezförmiger Haufen, sog. Miete, auf einem wasserfesten Betonboden aufgeschichtet sind und während des Trocknungsvorganges mit einer GoreTex®-Membran abgedeckt werden.

Die DE 20208885 U1 offenbart eine Verrottungsanlage für als Haufen aufgeschütteten Müll auf einem befestigten Untergrund, wobei die Anlage eine wasserabweisende und luftdurchlässige Plane zur Abdeckung des Mülls aufweist. Weiters besitzt die Anlage mehrere Stellwände zur seitlichen Begrenzung des Mülls, an denen die Plane angebracht ist.

Auch in der EP 1736461 A1 ist eine Vorrichtung zur Kompostierung von organischen Abfällen beschrieben, in welcher die Abfälle als trapezförmiger Haufen auf einem undurchlässigen, festen Boden aufgeschichtet sind und mit einer GoreTex®-Membran abgedeckt werden. Die offenbarte Vorrichtung weist weiters Seitenwände auf, die der seitlichen Begrenzung sowie zur Befestigung der GoreTex®-Membran dienen.

Bei diesen Verfahren ist als nachteilig anzusehen, dass der Müll während des Aufschüttens der Miete und während des Abtransportes des getrockneten Mülls vor Regen ungeschützt ist. Die entsprechenden Arbeiten können daher nur in niederschlagsfreien Perioden durchgeführt werden. In der Praxis werden solche Anlagen oft zusätzlich überdacht, was einen erheblichen finanziellen Aufwand bedingt. Außerdem erfordert das Aufbringen der Membran auf die Miete und das Abziehen der Membran von der Miete nach Abschluss des Trocknungsprozesses aufwändige Vorrichtungen, sodass der apparative Aufwand und die Kosten für derartige Anlagen entsprechend hoch sind. Weiters besteht die Gefahr, dass die Membran mechanisch beschädigt wird. Zudem werden Zugangswege zwischen den Mieten benötigt, was die Gesamtfläche der Anlage empfindlich vergrößert. Ein weiteres Problem ist die Bildung von Regenwasser-Pfützen auf der Membran, wenn diese nicht perfekt gespannt ist, da die Membran an den mit Pfützen bedeckten Stellen ihre Atmungsaktivität verliert.

Um die oben beschriebenen Nachteile zu vermeiden, sind im Stand der Technik auch Anlagen vorgeschlagen worden, bei denen die Membran nicht aufgelegt und dann wieder abgezogen werden muss, sondern bei denen ein Gebäude mit einem permanenten Membrandach vorgesehen ist. Bei solchen Gebäuden besteht jedoch das Problem, dass darauf geachtet werden muss, dass der vertikale Abstand zwischen der Miete und dem Membrandach nicht zu groß ist. Wenn der vertikale Abstand 1-2m überschreitet, kondensiert die in der aus der Miete austretenden Luft enthaltene Feuchtigkeit bevor sie die Membran durchsetzen kann, sodass die Feuchtigkeit im Gebäude verbleibt. Allerdings erfordern die Befüllung und die Entleerung des Gebäudes mit herkömmlichen Radladern, Baggern und dgl. eine bestimmte Mindesthöhe des Gebäudes; mit solchen Ladeeinrichtungen ist es nicht möglich, den Müll bis knapp unter das Membrandach aufzuschütten. Es wurden daher Gebäude mit verstellbaren Membrandächern vorgeschlagen, wobei das Membrandach beispielsweise höhenverstellbar oder aufklappbar ausgebildet ist. Das Membrandach wird für den Vorgang des Aufschüttens des Mülls daher angehoben oder aufgeklappt und für den Trocknungsvorgang dann abgesenkt oder zugeklappt. Der Aufwand für eine höhenverstellbare oder öffenbare Konstruktion des Daches ist jedoch hoch. Zudem ist das Material bei öffenbaren Dachkonstruktionen während dem Be- und Entladen dem Niederschlag ausgesetzt.
Aufgrund der bereits oben erwähnten Pfützen-Problematik sind diese bestehenden Lösungen mit fixen Strukturen gemäß dem Stand der Technik nie vollkommen flach sondern eher schräg oder gewölbt ausgebildet, um die Ausbildung von Pfützen zu vermeiden.

Die WO 2004/048719 A1 offenbart eine flexible Vorrichtung zur Abdeckung von organikhaltigem Abfall. Die Vorrichtung besitzt eine Abdeckplane, die eine Mehrzahl an mit Flüssigkeit befüllbaren bzw. aufblasbaren Stützelementen und mit den Stützelementen verbundene wasserdichte und gasdurchlässige Flächengebilde aufweist. Die Abdeckkonstruktion ist hierbei luftdicht am Boden befestigt. Im aufgestellten Zustand sind die Stützelemente gefüllt und bilden mit den gasdurchlässigen Flächengebilden ein dreidimensionales, hallenförmiges Gebilde aus, in welchem sich der organikhaltige Abfall befindet. Im abgesenkten Zustand sind die Stützelemente nicht gefüllt und das wasserdichte und gasdurchlässige Flächengebilde kommt direkt auf dem organikhaltigen Abfall zu liegen. Das Flächengebilde kann also je nach Bedarf gehoben oder gesenkt werden.
In der FR 2876399 A1 wird eine Vorrichtung zur biologischen Trocknung beschrieben, die zwei parallele Seitenwände und ein ein- und ausfahrbares Dach aufweist, wobei das Dach eine für Wasser undurchlässige Membran aufweist.
In der WO 02/00572 A1 wird ein System zur Trocknung von organischen Abfällen offenbart, das Seitenwände, eine Rückwand, eine Tür sowie ein fixes geneigtes Dach aufweist, wobei das Dach aus einem Laminat besteht, das eine semipermeable Membran aufweist. Das in der WO 02/00572 A1 beschriebene Dach ist allerdings als Schrägdach ausgebildet, was zu einem besonders hohen Freiraum zwischen dem zu einer Miete aufgeschütteten Müll und dem Dach führt. Dies begünstigt die Kondensation von Wasser innerhalb des Gebäudes, was wiederum den biologischen Trocknungsprozess erheblich verlangsamt. Ein großer Freiraum wird bei dieser Lösung zusätzlich durch das Erfordernis der Beladung mit in das Gebäude zu verfahrenden Transportfahrzeugen hervorgerufen.

Die Dokumente US2002/0019045A, US2008/0051620A und US2008/0032393A offenbaren Verfahren und Vorrichtungen zur Behandlung von Müll.

Es ist daher eine Aufgabe der Erfindung, ein Verfahren und eine Vorrichtung bereitzustellen, mit welchen die vorgenannten Nachteile ohne großen vorrichtungstechnischen Aufwand überwunden werden können.

Die Erfindung betrifft ein Verfahren gemäß Anspruch 1 und eine Vorrichtung gemäß Anspruch 8. Zur Lösung dieser Aufgabe sieht die Erfindung bei einem Verfahren der eingangs genannten Art vor, dass das Befüllen des Gebäudes und das Durchführen der biologischen Trocknung und ggf. das Austragen des Mülls bei unveränderter Anordnung des Daches erfolgt und dass das Befüllen des Gebäudes durch Abwerfen des Mülls von einer kontinuierlichen Fördereinrichtung erfolgt.
Dadurch, dass das Befüllen des Gebäudes und das Durchführen der biologischen Trocknung und ggf. das Austragen des Mülls bei unveränderter Anordnung des Daches erfolgt, kann auf aufwändige Dachkonstruktionen mit höhenverstellbarem oder öffenbarem Dach verzichtet und es kann mit einem fixen Dach das Auslangen gefunden werden. Dadurch, dass das fixe Membrandach für den Befüllvorgang und das Austragen nicht entfernt oder weggeklappt zu werden braucht, bleibt das Verfahren von äußeren Einflüssen, wie beispielsweise Schlechtwetter unbeeinflusst. Um bei einer solchen Ausbildung den Müll dennoch in einer ausreichenden Höhe, d.h. bis knapp unter das Dach, aufschütten zu können, kommt erfindungsgemäß eine kontinuierliche Fördereinrichtung zum Einsatz, die den Müll zur Bildung einer Miete abwirft. Das Abwurfende der kontinuierlichen Fördereinrichtung kann hierbei ohne weiteres bis knapp unter das Membrandach positioniert bzw. angehoben werden, sodass die erforderliche Füllhöhe in einfacher Weise gewährleistet ist.

Die Erfindung sieht vor, dass das Aufschütten des Mülls bis zu einer solchen Höhe der Miete erfolgt, dass der Abstand zwischen dem Dach und der höchsten Stelle der Miete weniger als 2m, vorzugsweise weniger als 1,5m, insbesondere 20 bis 100cm, beträgt. Ein besonders geringer vertikaler Abstand, wie z.B. ein Abstand von 1m oder weniger ist besonders bevorzugt, weil sich der Müll im Laufe des Trocknungsvorganges setzt und sichergestellt werden sollte, dass der vertikale Abstand zwischen der Miete und dem Membrandach sich während des Prozesses nicht auf mehr als 1,5m, insbesondere auf mehr als 2m vergrößert.
Wie bereits zuvor erwähnt, wirkt sich eine Minimierung des vertikalen Abstands zwischen der Miete und dem Dach positiv auf die Vermeidung von Kondensationsvorgängen im Inneren des Gebäudes aus, wobei die Gefahr einer Kondensation umso geringer ist, je geringer der vertikale Abstand zwischen Miete und Dach gewählt ist.
In einer besonders bevorzugten Ausbildung wird die Miete während der biologischen Trocknung von unten belüftet. Bei der biologischen Trocknung wird der Hausmüll belüftet und somit von Luft durchströmt und dabei aerob verrottet, wobei die Zufuhr von Sauerstoff zum mikrobiellen Abbau der biologisch leichter zersetzbaren organischen Anteile des Hausmülls führt. Besonders vorteilhaft wirkt sich die Belüftung hierbei aus, wenn die Luftzufuhr von unten erfolgt, die Luftaustrittsstellen der Belüftungsanlage also am Boden der Anlage angeordnet sind.

Die Erfindung sieht vor, dass die semipermeable Membran des Gebäudes flexibel ausgebildet ist und während des Befüllens des Gebäudes von der Fördereinrichtung nach oben gedrückt wird. Hierdurch wird der vertikale Abstand zwischen der Miete und dem Dach des Gebäudes noch effizienter verringert.

Bevorzugt ist, dass der Müll mit einer über die gesamte genutzte Grundfläche des Gebäudes im wesentlichen gleichen Schütthöhe aufgeschüttet wird. Dies gelingt insbesondere dadurch, dass der Müll erfindungsgemäß durch Abwerfen von der kontinuierlichen Fördereinrichtung aufgeschüttet wird. Wenn nun die Abwurfparabel durch Einstellung der Geschwindigkeit des Fördermittels und/oder durch Einstellung des Abwurfwinkels gezielt beeinflusst wird, kann der Müll auch bis in die Eck- und Randbereiche des Gebäudes gefördert werden, sodass sich eine möglichst einheitliche Füllhöhe ergibt und das Volumen des Gebäudes möglichst effizient genutzt werden kann. Außerdem führt eine einheitliche Füllhöhe dazu, dass überall die gleichen Belüftungsverhältnisse herrschen, da die bevorzugt von unten zugeführte Luft überall dieselbe Schütthöhe durchströmt.

Besonders bevorzugt ist, dass die Miete auf eine Höhe von mindestens 2m, insbesondere mindestens 3m aufgeschüttet wird.

Weiters ist bevorzugt vorgesehen, dass das Abwerfen des Mülls mit der Fördergeschwindigkeit der kontinuierlichen Fördereinrichtung erfolgt. In einer besonders bevorzugten Ausbildung beträgt die Fördergeschwindigkeit mindestens 2 m/s, bevorzugt mindestens 3 m/s.

Eine bevorzugte Weiterbildung sieht vor, dass die Fördereinrichtung gemäß dem Befüllungsfortschritt innerhalb des Gebäudes zurückgezogen wird. Die Befüllung beginnt somit an dem von der Einfahrtsöffnung des Gebäudes am weitesten entfernt gelegenen Ende und die Fördereinrichtung wird dann entsprechend dem Befüllungsfortschritt sukzessive zurückgefahren, bis sie schließlich durch die Einfahrtsöffnung des Gebäudes wieder herausgefahren werden kann. Zudem kann die Fördereinrichtung laterale Bewegungen bzw. Drehbewegungen ausführen, um eine gleichmäßige Befüllung der Anlage zu gewährleisten.
Gemäß einem weiteren Aspekt betrifft die Erfindung eine Vorrichtung umfassend ein geschlossenes Gebäude zur Aufnahme des zu einer Miete aufgeschütteten Mülls, wobei das Dach des Gebäudes als semipermeable Membran ausgebildet ist, eine kontinuierliche Fördereinrichtung, die den Müll kontinuierlich in das Innere des Gebäudes fördert, und eine Belüftungseinrichtung zum Belüften der Miete, dadurch gekennzeichnet, dass das Dach des Gebäudes in seiner Anordnung unveränderlich ausgebildet ist und die Fördereinrichtung derart ausgebildet ist, dass deren ausgabeseitiges Ende das Dach des Gebäudes um maximal 2m, bevorzugt maximal 1,5m, insbesondere 20 bis 100cm, unterschreitet.

Der besonders geringe Freiraum zwischen der obersten Seile der Miete und dem Dach der Vorrichtung verhindert die Kondensation von Wasser innerhalb des Gebäudes weitgehend und beschleunigt den biologischen Trocknungsprozess.

Bevorzugt ist vorgesehen, dass das Dach des Gebäudes als Flachdach ausgebildet ist. Bei einem flach ausgebildeten Dach ist der vertikale Abstand zwischen dem im Wesentlichen mit einheitlicher Schütthöhe aufgeschütteten Müll und dem Membrandach im Wesentlichen gleich. Dadurch können Stellen mit erhöhtem vertikalen Abstand zwischen dem Müll und dem Membrandach, wie sie z.B. bei einem Schräg- oder Giebeldach auftreten, vermieden werden. Der im Wesentlichen einheitliche Abstand zwischen der Miete und dem Dach kann daher wesentlich besser im Hinblick auf die Verringerung der Kondensationsgefahr optimiert werden.

Weiters ist bevorzugt vorgesehen, dass die Fördereinrichtung als Band- oder Schneckenförderer ausgebildet ist. Hierdurch wird eine kontinuierliche Förderung des Mülls in das Innere der Anlage sichergestellt.

Weiters wäre es denkbar, dass nicht nur das Dach des Gebäudes als semipermeable Membran ausgebildet ist, sondern ebenfalls eine bzw. mehrere der Seitenwände des Gebäudes von semipermeablen Membranen gebildet werden.

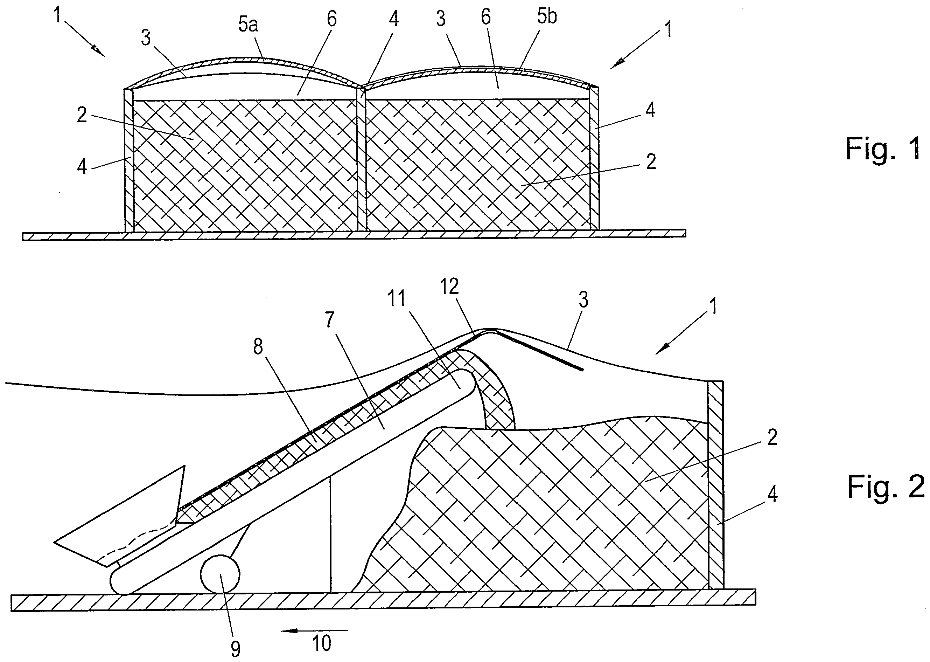

Die Erfindung wird nachfolgend anhand eines in der Zeichnung schematisch dargestellten Ausführungsbeispiels näher erläutert. In dieser zeigt Fig. 1 eine Schnittansicht zweier Varianten des erfindungsgemäßen Gebäudes und Fig. 2 eine Schnittansicht des erfindungsgemäßen Gebäudes samt Fördereinrichtung.

In Fig. 1 ist ein geschlossenes Gebäude 1 zur Aufnahme des zu einer Miete aufgeschütteten Mülls 2 dargestellt, wobei das Dach des Gebäudes 1 als semipermeable Membran 3 ausgebildet ist, die an den seitlichen Wänden 4 des Gebäudes 1 befestigt ist und weiters von einer Stützeinrichtung 5a,5b gestützt wird. Die Stützeinrichtung kann hierbei entweder oberhalb 5a oder unterhalb 5b der semipermeablen Membran 3 angebracht sein und kann beispielsweise in der Form eines starren Gerüsts oder dgl. ausgebildet sein. Beispielsweise könnte das Gerüst auch von flexiblen, z.B. aus Fiberglas gefertigten, Stangen gebildet sein, wodurch die gewünschte Flexibilität erreicht wird, aber die Bildung von Pfützen durch Regenwasser-Ansammlungen erfolgreich vermieden wird.

Das Dach des Gebäudes ist in seiner Anordnung unveränderlich ausgebildet. Der Freiraum 6 zwischen der Miete 2 und der semipermeablen Membran 3 ist gering, wodurch die Kondensation von Wasser innerhalb des Gebäudes 1 weitgehend verhindert und der biologische Trocknungsprozess beschleunigt wird.

In Fig. 2 ist eine Schnittansicht des erfindungsgemäßen Gebäudes 1 samt Fördereinrichtung 7 dargestellt. Die Fördereinrichtung 7 ist hier als Bandförderer ausgebildet. Fig. 2 zeigt, dass der Müll 8 mittels der Fördereinrichtung kontinuierlich in das Innere des Gebäudes 1 gefördert und dort zu einer Miete 2 aufgeschüttet wird. Die Fördereinrichtung ist hierbei derart ausgebildet, dass deren auswurfseitiges Ende 11 das Dach 3 des Gebäudes 1 nur geringfügig unterschreitet.

Fig. 2 ist weiters zu entnehmen, dass die Fördereinrichtung 7 einen vorzugsweise bügelartigen, im Wesentlichen parallel zum Förderband und oberhalb desselben verlaufenden Abstandhalter 12 aufweist, der sich über das abwurfseitige Ende 11 hinaus erstreckt. Wenn das abwurfseitige Ende 11 der Fördereinrichtung 7 entsprechend nach oben verfahren wird, um den Müll möglichst bis knapp unter das Membrandach 3 zu fördern, drückt der Abstandhalter 12 die flexible Membran 3 nach oben, um dadurch mehr Platz für die Förderung des Mülls 8 zu schaffen.

Die Fördereinrichtung 7 ist verfahrbar ausgebildet und umfasst Rollen 9, wodurch die Fördereinrichtung 7 gemäß dem Befüllungsfortschritt des Gebäudes 1 in Richtung des Pfeils 10 innerhalb des Gebäudes 1 zurückgezogen werden kann.

## Patentansprüche

1. Verfahren zur Behandlung von Müll, insbesondere Hausmüll, umfassend das Bereitstellen eines geschlossenen Gebäudes (1) zur Aufnahme des Mülls (8), wobei das Dach des Gebäudes als gas- und dampfdurchlässige, aber wasserdichte Membran (3) ausgebildet ist, das Befüllen des Gebäudes (1) mit dem Müll (8), wobei der Müll zu einer Miete (2) aufgeschüttet wird, das Durchführen einer biologischen Trocknung des Mülls (8) unter Luftzufuhr, wobei der Luftabzug durch die gas- und dampfdurchlässige, aber wasserdichte Membran (3) hindurch erfolgt, und das Austragen des getrockneten Mülls aus dem Gebäude, wobei das Befüllen des Gebäudes (1) und das Durchführen der biologischen Trocknung und ggf. das Austragen des Mülls (8) bei unveränderter Anordnung des Daches erfolgt und dass das Befüllen des Gebäudes (1) durch Abwerfen des Mülls (8) von einer Fördereinrichtung (7) zur kontinuierlichen Förderung des Mülls (8) erfolgt, wobei das Aufschütten des Mülls (8) bis zu einer solchen Höhe der Miete (2) erfolgt, dass der Abstand zwischen dem Dach und der höchsten Stelle der Miete (2) weniger als 2m, vorzugsweise weniger als 1,5m, insbesondere 20 bis 100cm, beträgt und die gas- und dampfdurchlässige, aber wasserdichte Membran (3) des Gebäudes (1) flexibel ausgebildet ist und während des Befüllens des Gebäudes (1) von der Fördereinrichtung (7) lokal begrenzt nach oben gedrückt wird.

2. Verfahren nach Anspruch 1, **dadurch gekennzeichnet, dass** die Miete (2) während der biologischen Trocknung von unten belüftet wird.

3. Verfahren nach Anspruch 1 oder 2, **dadurch gekennzeichnet, dass** der Müll (8) mit einer über die gesamte Grundfläche des Gebäudes (1) im wesentlichen gleichen Schütthöhe aufgeschüttet wird.

4. Verfahren nach einem der Ansprüche 1, 2 oder 3, **dadurch gekennzeichnet, dass** die Miete (2) auf eine Höhe von mindestens 2m, insbesondere mindestens 3m aufgeschüttet wird.

5. Verfahren nach einem der Ansprüche 1 bis 4, **dadurch gekennzeichnet, dass** das Abwerfen des Mülls (8) mit der Fördergeschwindigkeit der Fördereinrichtung (7) zur kontinuierlichen Förderung des Mülls (8) erfolgt.

6. Verfahren nach Anspruch 5, **dadurch gekennzeichnet, dass** die Fördergeschwindigkeit mindestens 2 m/s, bevorzugt mindestens 3 m/s beträgt.

7. Verfahren nach einem der Ansprüche 1 bis 6, **dadurch gekennzeichnet, dass** die Fördereinrichtung (7) gemäß dem Befüllungsfortschritt innerhalb des Gebäudes (1) zurückgezogen wird.

8. Vorrichtung zur Durchführung eines Verfahrens gemäß einem der Ansprüche 1 bis 7, umfassend ein geschlossenes Gebäude (1) zur Aufnahme des zu einer Miete (2) aufgeschütteten Mülls, wobei das Dach des Gebäudes als gas- und dampfdurchlässige, aber wasserdichte Membran (3) ausgebildet ist, eine Fördereinrichtung (7), die geeignet ist den Müll (8) kontinuierlich in das Innere des Gebäudes (1) zu fördern, und eine Belüftungseinrichtung zum Belüften der Miete, wobei das Dach des Gebäudes (1) in seiner Anordnung unveränderlich ausgebildet ist und die Fördereinrichtung (7) einen vorzugsweise bügelartigen, im Wesentlichen parallel zum Förderband und oberhalb desselben verlaufenden Abstandhalter (12) aufweist, der sich über das ausgabeseitige Ende (11) hinaus erstreckt, und die Fördereinrichtung (7) derart ausgebildet ist, dass deren ausgabeseitiges Ende (11) das Dach des Gebäudes (1) um maximal 2m, bevorzugt maximal 1,5m, insbesondere 20 bis 100cm, unterschreitet und die gas- und dampfdurchlässige, aber wasserdichte Membran (3) flexibel ausgebildet ist.

9. Vorrichtung nach Anspruch 8, **dadurch gekennzeichnet, dass** das Dach des Gebäudes (1) als Flachdach ausgebildet ist.

10. Vorrichtung nach Anspruch 8 oder 9, **dadurch gekennzeichnet, dass** die Fördereinrichtung (7) als Band- oder Schneckenförderer ausgebildet ist.

## Claims

1. A method for treating waste, in particular domestic waste, comprising the providing of a closed building (1) for receiving the waste (8), the roof of the building being designed as a gas- and vapor-permeable, yet water-tight membrane (3), the filling of the building (1) with the waste (8), the waste being piled into a mound (2), the performing of a biological drying of the waste (8) with the supply of air, the air exhaust taking place through the gas- and vapor-permeable, yet water-tight membrane (3), and the discharging of the dried waste from the building, whereby the filling of the building (1) and the performing of the biological drying, and optionally the discharging, of the waste (8) are carried out with an unchanged arrangement of the roof, and the filling of the building (1) is carried out by dropping the waste (8) from a conveying device (7) for continuously conveying the waste (8), wherein the piling of the waste (8) takes place to such a height of the mound (2) that the distance between the roof and the highest point of the mound (2) is less than 2m, preferably less than 1.5m, in particular 20 to 100cm, and the gas- and vapor-permeable, yet water-tight membrane (3) of the building (1) is designed to be flexible and is pressed upwardly by the conveying device (7) in a locally limited manner during the filling of the building (1).

2. A method according to claim 1, **characterized in that** the mound (2) is aerated from below during said biological drying.

3. A method according to claim 1 or 2, **characterized in that** the waste (8) is piled at a dumping height substantially equal over the total floor area of the building (1).

4. A method according to any one of claims 1, 2 or 3, **characterized in that** the mound (2) is piled to a height of at least 2m, in particular at least 3m.

5. A method according to any one of claims 1 to 4, **characterized in that** the dropping of the waste (8) takes place at the conveying speed of the conveying device (7) for continuously conveying the waste (8).

6. A method according to claim 5, **characterized in** the conveying speed is at least 2 m/s, preferably at least 3 m/s.

7. A method according to any one of claims 1 to 6, **characterized in that** the conveying device (7) is retracted as a function of the filling progress within the building (1).

8. A device for carrying out the method according to any one of claims 1 to 7, comprising a closed building (1) for receiving the waste piled into a mound (2), the roof of the building being designed as a gas- and vapor-permeable, yet water-tight membrane (3), a conveying device (7) suitable for continuously conveying the waste (8) into the interior of the building (1), and an aeration device for aerating the mound, whereby the roof of the building (1) is designed to be unchangeable in its arrangement and the conveying device (7) comprises a spacer (12), preferably in the form of a bow, extending substantially in parallel with the conveyor belt above the latter and reaching beyond the delivery end (11), and the conveying device (7) is designed such that its delivery end (11) is lower than the roof of the building (1) by a maximum of 2m, preferably a maximum of 1.5m, in particular 20 to 100cm, and the gas- and vapor-permeable, yet water-tight membrane (3) is designed to be flexible.

9. A device according to claim 8, **characterized in that** the roof of the building (1) is designed as a flat roof.

10. A device according to claim 8 or 9, **characterized in that** the conveying device (7) is designed as a belt or screw conveyor.

## Revendications

1. Procédé de traitement de déchets, en particulier de déchets ménagers, comprenant la préparation d'un bâtiment fermé (1) pour recevoir les déchets (8), dans lequel le toit du bâtiment se présente sous la forme d'une membrane (3) perméable aux gaz et à la vapeur, mais étanche à l'eau, le remplissage du bâtiment (1) par les déchets (8), dans lequel les déchets sont déversés en un tas (2), la réalisation d'un séchage biologique des déchets (8) avec appoint d'air, dans lequel l'évacuation de l'air se fait à travers la membrane (3) perméable aux gaz et à la vapeur, mais étanche à l'eau et l'évacuation des déchets séchés du bâtiment, dans lequel le remplissage du bâtiment (1) et la réalisation du séchage biologique et éventuellement l'évacuation des déchets (8) se font sans modifier l'agencement du toit et le remplissage du bâtiment (1) se fait par rejet des déchets (8) par un dispositif de transport (7) pour le transport en continu des déchets (8), dans lequel le déversement des déchets (8) se fait jusqu'à une hauteur du tas (2) telle que la distance entre le toit et le point le plus haut du tas (2) atteigne moins de 2 m, de préférence moins de 1,5 m, en particulier 20 à 100 cm, et la membrane (3) perméable aux gaz et à la vapeur, mais étanche à l'eau du bâtiment (1), se présente sous une forme souple et est pressée vers le haut de manière limitée localement par le dispositif de transport (7) au cours du remplissage du bâtiment (1).

2. Procédé selon la revendication 1, **caractérisé en ce que** le tas (2) est aéré par en dessous au cours du séchage biologique.

3. Procédé selon la revendication 1 ou 2, **caractérisé en ce que** les déchets (8) sont déversés à une hauteur de déchargement sensiblement égale sur toute la surface du sol du bâtiment (1).

4. Procédé selon l'une quelconque des revendications 1, 2 ou 3, **caractérisé en ce que** le tas (2) est déversé à une hauteur d'au moins 2 m, en particulier d'au moins 3 m.

5. Procédé selon l'une quelconque des revendications 1 à 4, **caractérisé en ce que** le rejet des déchets (8) se fait à la vitesse de transport du dispositif de transport (7) pour un transport continu des déchets (8).

6. Procédé selon la revendication 5, **caractérisé en ce que** la vitesse de transport atteint au moins 2 m/s, de préférence au moins 3 m/s.

7. Procédé selon l'une quelconque des revendications 1 à 6, **caractérisé en ce que** le dispositif de transport (7) est retiré à l'intérieur du bâtiment (1) en fonction de l'avancement du remplissage.

8. Dispositif de réalisation d'un procédé selon l'une quelconque des revendications 1 à 7, comprenant un bâtiment fermé (1) pour recevoir les déchets déversés en un tas (2), dans lequel le toit du bâtiment se présente sous la forme d'une membrane (3) perméable aux gaz et à la vapeur, mais étanche à l'eau, un dispositif de transport (7) qui convient pour transporter les déchets (8) en continu à l'intérieur du bâtiment (1) et un dispositif d'aération pour aérer le tas, dans lequel le toit du bâtiment (1) se présente sous une forme telle que son agencement ne puisse être modifié et le dispositif de transport (7) présente une entretoise (12) de préférence en forme d'étrier, sensiblement parallèle à la bande transporteuse et s'étendant au-dessus de celle-ci, qui s'étend par-dessus l'extrémité côté sortie (11) et le dispositif de transport (7) se présente sous une forme telle que son extrémité côté sortie (11) se situe en dessous du toit du bâtiment (1) au maximum de 2 m, de préférence au maximum de 1,5 m, en particulier de 20 à 100 cm et la membrane (3) perméable aux gaz et à la vapeur, mais étanche à l'eau, se présente sous une forme souple.

9. Dispositif selon la revendication 8, **caractérisé en ce que** le toit du bâtiment (1) se présente sous la forme d'un toit plat.

10. Dispositif selon la revendication 8 ou 9, **caractérisé en ce que** le dispositif de transport (7) se présente sous la forme d'une bande transporteuse ou d'un transporteur à vis.
